# EUROPEAN PATENT APPLICATION

(11) **EP 4 821 336 A1**
(43) Date of publication of application: **14.10.2026**
(21) Application number: 26170431.6
(22) Date of filing: 02.04.2026
(51) Int. Cl.: A01B 71/04, A01C 5/06

(54) **AGRICULTURAL IMPLEMENTS COMPRISING BEARING CAPS AND RELATED METHODS**

(30) Priority: 10.04.2025 GB 202505361
(71) Applicant: Agco Do Brasil Soluções Agrícolas Ltda, São Paulo, 13213-105 (BR)
(72) Inventor: Matter, Jarlis Luiz, 98200-000 Ibiruba (BR); Damo Cunha, Venicius, Não Me Toque (BR)
(74) Representative: AGCO Intellectual Property Department

(57) **Abstract**

An agricultural implement includes at least one rotating ground-engaging element configured to rotate about a corresponding axle; and at least one bearing cap coupled to the corresponding axle. Each bearing cap consists essentially of an elastomeric material, each bearing cap defines a generally cylindrical sealing surface and a closed exterior surface, and each generally cylindrical sealing surface is configured to form a seal with the at least one ground-engaging element and protect an interface between the at least one ground-engaging element and the corresponding axle. A method includes coupling at least one bearing cap to the at least one ground-engaging element, and forming a seal between the at least one bearing cap and the at least one ground-engaging element to protect an interface between the at least one ground-engaging element and the corresponding axle.

## Description

### CROSS-REFERENCE TO RELATED APPLICATIONS

### FIELD

Embodiments of the present disclosure relate generally to agricultural implements, and more particularly, to implements that have disc blades or other rotating ground-engaging elements.

### BACKGROUND

Modern farms are faced with a variety of problems, including increased concern for soil erosion, crop residue management, and rising production costs with stagnant crop prices. One way farmers are addressing these concerns is to reduce, as far as possible, the number of passes which a farmer must make over the fields. In corn growing operations, after the corn is harvested, a farmer may conduct fall tillage to bury the crop residue (*e.g.,* stocks or stubble) from the harvested crop and to break up sub-soil compaction in preparation for spring planting. Disc harrow implements have been developed to accomplish both of these tasks in a single pass.

Disc harrows contain a set of rotating blades that cut and incorporate residue into the soil. The rotation of the blades is caused by forward travel of the implement being pulled through the field by a tractor. One typical disc harrow has a pair of wings, each having multiple gangs of disc blades, mounted on the front of the implement with the wings angled inward and rearward toward each other followed by another pair of wings having disc gangs which are angled inward and forward toward each other.

Agricultural planters with numerous row units are used to plant seeds upon or in the ground. Planters may have a central portion pulled by a tractor, and may have wings extending from either side. The individual row units, mounted to the center section or to a wing, typically deliver seeds into separate rows. The row units may receive seed from a common central hopper. Each row unit may have ground-engaging tools to clear residue, open a seed trench, plant seeds, deliver fertilizer, close a seed trench, etc. These tools may also have plugging problems, as described above in relation to disc harrows.

### BRIEF SUMMARY

In some embodiments, an agricultural implement includes at least one rotating ground-engaging element configured to rotate about a corresponding axle; and at least one bearing cap coupled to the corresponding axle. Each bearing cap consists essentially of an elastomeric material, each bearing cap defines a generally cylindrical sealing surface and a closed exterior surface, and each generally cylindrical sealing surface is configured to form a seal with the at least one ground-engaging element to protect an interface between the at least one ground-engaging element and the corresponding axle.

The elastomeric material may exhibit a durometer hardness between 50 and 90 Shore A. The elastomeric material may comprise a material selected from the group consisting of natural rubber, synthetic rubber, vulcanized rubber, styrene butadiene rubber, butyl rubber, neoprene rubber, silicone rubber, nitrile rubber, EPDM rubber, and fluorosilicone rubber.

The generally cylindrical sealing surface may have a circular ridge on the exterior thereof. If present, the circular ridge is disposed at least partially within a groove defined by the at least one ground-engaging element.

The closed exterior surface may comprise a generally circular planar exterior surface, and optionally at least one tab extending beyond a diameter of a circle defining the generally circular planar exterior surface.

The at least one bearing cap is configured to retain itself to the at least one ground-engaging element without any additional member.

The at least one bearing cap may be removable from the at least one ground-engaging element by hand, without any tools.

The agricultural implement may include a toolbar and a plurality of row units spaced along the toolbar. The at least one ground-engaging element may be carried by one of the row units. Each row unit may be coupled to the toolbar by a parallel linkage. Each row unit may comprise a planter row unit and/or a fertilizer row unit. The toolbar may comprise a first section and at least one wing section hingedly coupled to the first section.

Some embodiments include a method for servicing an agricultural implement. The agricultural implement has at least one rotating ground-engaging element configured to rotate about a corresponding axle. The method includes coupling at least one bearing cap to the at least one ground-engaging element, Each bearing cap consists essentially of an elastomeric material, and each bearing cap defines a generally cylindrical sealing surface and a closed exterior surface. The method includes forming a seal between the generally cylindrical sealing surface of at least one bearing cap and the at least one ground-engaging element to protect an interface between the at least one ground-engaging element and the corresponding axle.

Coupling the at least one bearing cap to the at least one ground-engaging element may be performed by pressing the bearing cap into the at least one ground-engaging element by hand.

The at least one bearing cap may also be removed from the at least one ground-engaging element by hand, without any tools.

Coupling the at least one bearing cap to the at least one ground-engaging element may include elastically deforming the at least one bearing cap.

Forming a seal between the at least one bearing cap and the at least one ground-engaging element may include returning the at least one bearing cap to an undeformed configuration.

Within the scope of this disclosure it should be understood that the various aspects, embodiments, examples, and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 is a simplified top view of a tractor pulling an implement;
FIG. 2 is a simplified side view of the tractor and implement shown in FIG. 1;
FIG. 3 is a simplified view of disc blade assemblies with bearing caps;
FIG. 4 is a simplified perspective view of the disc blade assemblies shown in FIG. 3;
FIG. 5A is a simplified perspective view of a bearing cap shown in FIG. 3; and

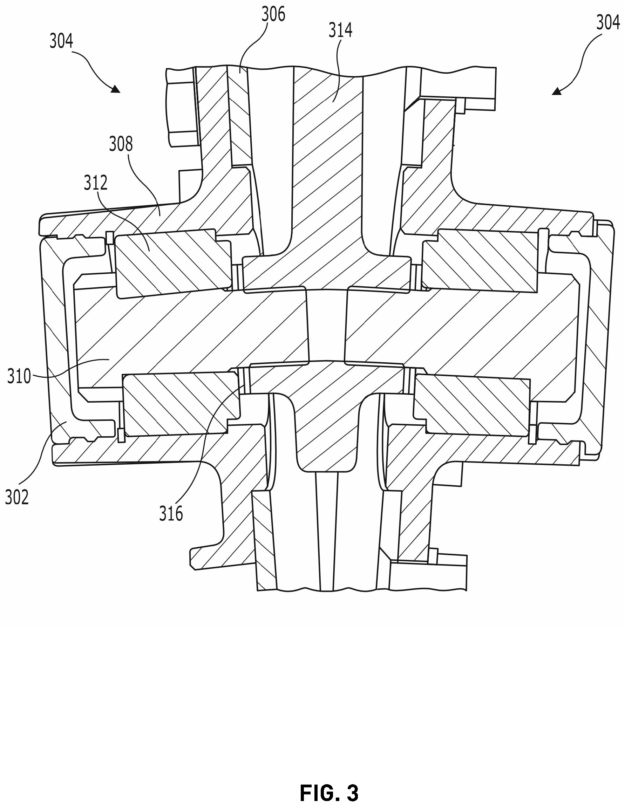

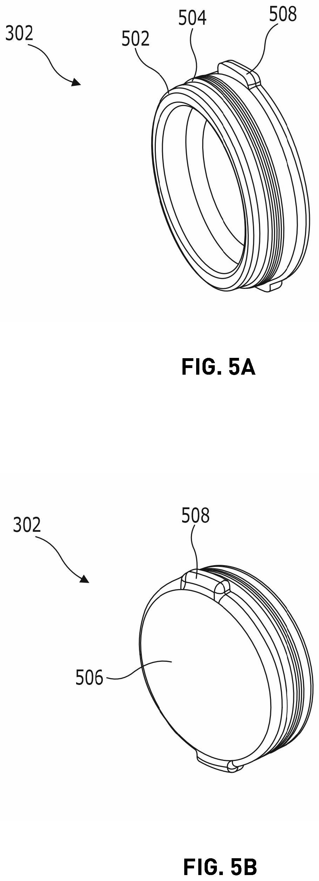

FIG. 5A is another simplified perspective view of a bearing cap shown in FIG. 3.

### DETAILED DESCRIPTION

The illustrations presented herein are not actual views of any agricultural implement or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" to avoid any implication that other, compatible materials, structures, features, and methods usable in combination therewith should or must be excluded.

As used herein, the term "configured" refers to a size, shape, material composition, and arrangement of one or more structure and/or apparatus facilitating operation thereof in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

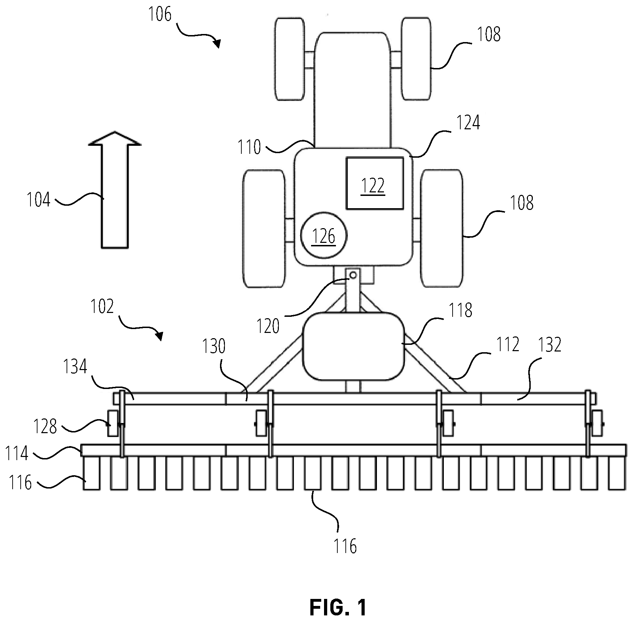

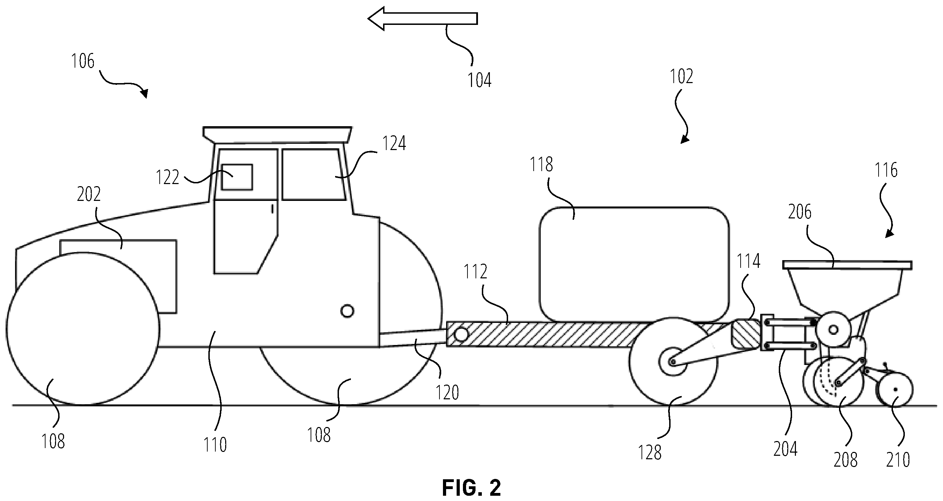

FIG. 1 illustrates a simplified top view of an agricultural implement 102. FIG. 2 illustrates a simplified side view of the implement 102. In use, the implement 102 is drawn in a forward direction 104 by a tractor 106. The tractor 106 has wheels 108, an engine 202, a chassis 110, and other elements as known in the art. The implement 102 has a frame 112 carrying a toolbar 114 supporting row units 116. Each row unit 116 is physically connected to the toolbar 114 by a parallel linkage 204. The row units 116 may include a mini hopper 206 fluidly connected to a central hopper 118 containing seed to be planted and/or fertilizer to be applied. That is, the row units 116 may be planter and/or fertilizer row units of any design, which are generally known in the art. The implement 102 is connected to the tractor 106 by a tow hitch 120. A computer 122, which may include a central processing unit ("CPU"), memory, implement controller, and graphical user interface ("GUI") (*e.g.,* a touch-screen interface), is typically located in an operator cabin 124 of the tractor 106. A global positioning system GPS receiver 126 may be mounted to the tractor 106 and connected to communicate with the computer 122. The implement controller is configured to communicate with the row units 116 and/or the GPS receiver 126, such as by wired or wireless communication.

The implement 102 may optionally be supported in the field by wheels 128 coupled to the frame 112. The frame 112 may include a first section 130 (*e.g.,* a center section) configured to be towed by the tractor 106, and one or more wing sections 132, 134 hingedly coupled to the first section 130. For example, and as shown in FIG. 1, the first section 130 may be a center section, and two wing sections 132, 134 may be attached to opposite sides thereof. The wing sections 132, 134 may fold for transport or storage, and unfold (as shown in FIG. 1) for planting, fertilizing, or other field operations. Typically, the wheels 128 may support any or all of the wing sections 132, 134. In other embodiments, the center section 130 may be omitted, and two wing sections 132, 134 may be connected directly to one another.

Each of the row units 116 may include one or more rotating ground-engaging element, shown in FIG. 1 as opening discs 208 and closing discs 210. Other disc blades or other ground-engaging elements may be present instead of or in addition to these. Row units are described, for example, in U.S. Patent Application Publication 2021/0315147 A1, "Systems Comprising Agricultural Implements Connected to Lifting Hitches and Related Control Systems and Methods," published October 14, 2021; and U.S. Patent Application Publication 2020/00396897 A1, "Fluid Control System," published December 24, 2020.

The ground-engaging elements of each row unit are configured to rotate about a corresponding axle or shaft, and may include a bearing cap 302. The rotating portion of each ground-engaging element is referred to generally herein as a disc blade assembly 304, though the ground-engaging element may include other tools besides disc blades (e.g., row cleaners, press wheels, etc.). A person skilled in the art will understand how the bearing cap 302 could be used with other such ground-engaging elements based on the figures and description herein. The bearing cap 302 may also be referred to as a "hub cap" or "dust cap."

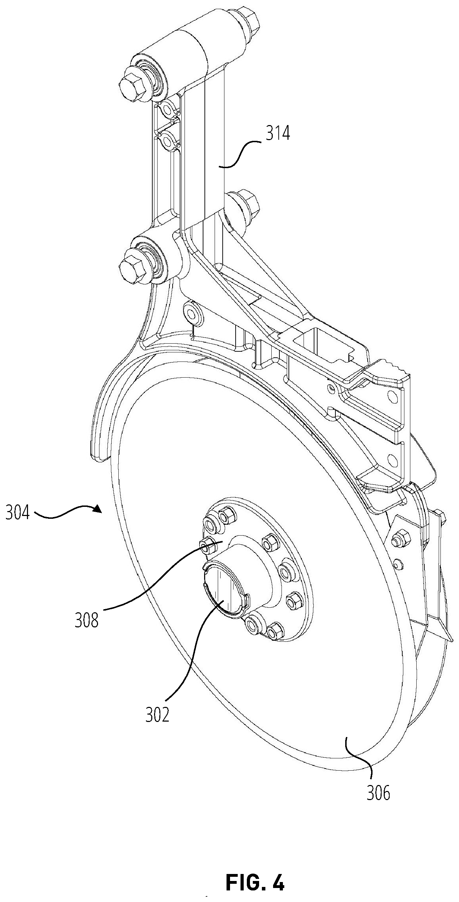

FIG. 3 is a simplified cross-sectional view of a portion of a row unit 116 showing two disc blade assemblies 304 and two bearing caps 302. FIG. 4 is a simplified perspective view of the row unit 116. Each disc blade assembly 304 includes a disc blade 306 secured to a hub 308, which is coupled to the axle 310 (or shaft) about which the disc blade assembly 304 rotates by bearings 312. The axle 310 may be coupled to a row unit frame 314. For example, the axle 310 may be a bolt with smooth annular shoulder surface over which the bearing 312 rotates. One or more spacers 316 (*e.g.,* washers) may be used to adjust the position of the disc blade 306 relative to the row unit frame 314. The spacers 316 may be changed frequently to account for wear of the disc blades 306.

In some embodiments, the hub 308 may be omitted (e.g., if the disc blade 306 itself includes the structure to be coupled directly to the bearings 312). The bearing cap 302 is configured form a seal with the disc blade assembly 304 and protect an interface between the disc blade assembly 304 and the corresponding axle (*i.e.,* the axle 310).

The bearing cap 302 consists essentially of an elastomeric material. As used herein, the term "elastomeric material" means and includes a polymer capable of recovering its original size and shape after deformation. In other words, an elastomeric material is a polymer having elastic or viscoelastic properties. Elastomeric materials may also be referred to as "elastomers" or "elastomeric polymers" in the art. Elastomeric materials include, without limitation, homopolymers (polymers having a single chemical unit repeated) and copolymers (polymers having two or more chemical units). The bearing cap 302 may include, for example, natural rubber, synthetic rubber, vulcanized rubber, styrene butadiene rubber, butyl rubber, neoprene rubber, silicone rubber, nitrile rubber, EPDM rubber, fluorosilicone rubber, or any other selected material. Other elastomeric materials are described in more detail in U.S. Patent 11,142,594, "Functionalized Resin Having a Polar Linker," granted October 12, 2021; U.S. Patent 11,844,451, "Pillow Including Gelatinous Elastomer Cushion Having Deformable Wall Members and Related Methods," granted December 19, 2023; and U.S. Patent 12,076,487, "Seal-forming Structure, Positioning and Stabilizing Structure and Diffuser Vent for Patient Interface," granted September 3, 2024.

The elastomeric material may generally exhibit a durometer hardness between 50 and 90 Shore A, though other values of hardness may be selected based on the particular geometry and dimensions of the bearing cap 302. The elastomeric material is formulated such that the bearing cap 302 can be pressed into the disc blade assembly 304 by hand (without any tools) or with simple hand tools (e.g., a mallet), and form a seal when installed in this manner. That is, no separate seal is required between the bearing cap 302 and the disc blade 306 or the axle 310 to form a seal to protect bearings or other parts. Furthermore, because the bearing cap 302 is removable by hand, without any tool, the operator or technician can easily make repairs in the field, without the need to handle additional parts or special tools.

FIG. 5A and FIG. 5B are simplified perspective views of the bearing cap 302 alone. The bearing cap 302 defines a generally cylindrical sealing surface 502 having circular ridge 504 on the sealing surface 502.

When installed in the disc blade assembly 304, the circular ridge 504 is disposed at least partially within a groove defined by the disc blade assembly 304 (see FIG. 3).

The bearing cap 302 defines a generally circular planar exterior surface 506, which is exposed when the bearing cap 302 is installed in the hub 308 of the disc blade assembly 304. The exterior surface 506 is entirely closed within the sealing surface 502, without any perforation or holes therein. When the sealing surface 502 is installed on the hub 308, the exterior surface 506 prevents material from passing into or out of the hub 308.

The bearing cap 302 may define at least one tab 508 extending beyond a diameter of a circle defining the generally circular planar exterior surface 506. The tab 508, if present, may be used to facilitate removal of the bearing cap 302, such as by providing a point for a person to grasp or pry the bearing cap 302 using fingers. However, if the tab 508 is not present, a person may still be able to grasp the bearing cap 302. If the tab 508 is present, the tab 508 is aligned with a corresponding portion of the hub 308. If the tab 508 is omitted, the bearing cap 302 may be installed without regard to the orientation in the hub 308.

Thus, the bearing cap 302 is removable from the disc blade assembly 304 by hand. In this context, the phrase "by hand" means using only hands, without tools. Tools such as pry bars, screwdrivers, etc., can damage sealing surfaces, and render the bearing cap 302 ineffective for subsequent use. Tools can also damage the sealing surfaces of the disc blade assembly 304, making even new bearing caps 302 ineffective to seal with the disc blade assembly 304. Thus, it is beneficial to remove the bearing cap 302 without using such tools. During removal, the bearing cap 302 is elastically deformed, and the bearing cap 302 returns to its original shape after removal. The bearing cap 302 is likewise deformed to be reinstalled, and once installed, returns to an undeformed configuration. The bearing cap 302 forms a seal with the disc blade assembly 304 in the undeformed configuration. A person skilled in the art will recognize that the disc blade assembly 304 may cause a small amount of pressure on parts of the bearing cap 302 when the bearing cap 302 is fully installed. This may help form a seal between the bearing cap 302 and the disc blade assembly 304, but the bearing cap 302 nonetheless has substantially the same shape when installed in the disc blade assembly 304 and when entirely free.

The bearing cap 302 is configured to retain itself to the disc blade assembly 304 without any additional members. That is, the bearing cap 302 has enough rigidity so that the integral ridge 504 holds the bearing cap 302 in place. Furthermore, the bearing cap 302 itself forms a seal with the disc blade assembly 304, without a separate O-ring or other sealing member.

The configuration described and illustrated herein has several advantages over the conventional bearing caps. Disc blade assemblies 304 may commonly be adjusted to account for wear, such as by adding or removing spacers 316. This adjustment may take place in the field. To make these adjustments, the bearing cap 302 is removed. Because no additional fasteners or seals are required, removal and replacement of the bearing cap 302 is relatively simpler than conventional bearing caps. That is, the bearing cap 302 can be removed and replaced by hand, without a snap ring, bolts, etc. The bearing cap 302 can therefore be removed and installed without snap-ring pliers, wrenches, hammers, *etc.,* which tools carry inherent risk for use (*e.g.,* risk of a snap ring flying off of snap-ring pliers, risk of hand injury due to a hammer, *etc*.). The risk of losing a seal, fastener, or other part while the bearing cap 302 is removed for service is drastically reduced. There are fewer discrete parts and fewer total parts to keep in stock at manufacturing and service facilities, which translates into lower costs and supply chain simplification.

All references cited herein are incorporated herein in their entireties. If there is a conflict between definitions herein and in an incorporated reference, the definition herein shall control.

## Claims

1. An agricultural implement comprising:
at least one rotating ground-engaging element configured to rotate about a corresponding axle; and
at least one bearing cap coupled to the corresponding axle, wherein each bearing cap consists essentially of an elastomeric material, wherein each bearing cap defines a generally cylindrical sealing surface and a closed exterior surface, and wherein each generally cylindrical sealing surface is configured to form a seal with the at least one ground-engaging element to protect an interface between the at least one ground-engaging element and the corresponding axle.

2. The agricultural implement of claim 1, wherein the elastomeric material exhibits a durometer hardness between 50 and 90 Shore A.

3. The agricultural implement of claim 1 or claim 2, wherein the elastomeric material comprises a material selected from the group consisting of natural rubber, synthetic rubber, vulcanized rubber, styrene butadiene rubber, butyl rubber, neoprene rubber, silicone rubber, nitrile rubber, EPDM rubber, and fluorosilicone rubber.

4. The agricultural implement of any one of claims 1 to 3, wherein the generally cylindrical sealing surface has a circular ridge on an exterior thereof.

5. The agricultural implement of claim 4, wherein the circular ridge is disposed at least partially within a groove defined by the at least one ground-engaging element.

6. The agricultural implement of any one of claims 1 to 5, wherein the closed exterior surface comprises generally circular planar exterior surface.

7. The agricultural implement of any one of claims 1 to 6, wherein the at least one bearing cap is configured to retain itself to the at least one ground-engaging element without any additional member.

8. The agricultural implement of any one of claims 1 to 7, further comprising a toolbar and a plurality of row units spaced along the toolbar.

9. The agricultural implement of claim 8, wherein the at least one ground-engaging element is carried by one of the row units.

10. The agricultural implement of claim 8 or 9, wherein each row unit comprises a planter row unit or a fertilizer row unit.

11. A method for servicing the agricultural implement of any one of claims 1 to 10, the method comprising:
coupling the at least one bearing cap to the at least one ground-engaging element; and
forming a seal between the generally cylindrical sealing surface of the at least one bearing cap and the at least one ground-engaging element to protect an interface between the at least one ground-engaging element and the corresponding axle.

12. The method of claim 11, wherein coupling the at least one bearing cap to the at least one ground-engaging element comprises pressing the bearing cap into the at least one ground-engaging element by hand.

13. The method of claim 11 or 12, further comprising removing the at least one bearing cap from the at least one ground-engaging element by hand.

14. The method of any one of claims 11 to 13, wherein coupling the at least one bearing cap to the at least one ground-engaging element comprises elastically deforming the at least one bearing cap.

15. The method of any one of claims 11 to 14, wherein forming a seal between the at least one bearing cap and the at least one ground-engaging element comprises returning the at least one bearing cap to an undeformed configuration.
